# FASCICULE DE BREVET EUROPEEN

(11) **EP 2 500 268 B1**
(45) Date de publication et mention de la délivrance du brevet: **16.10.2013**
(21) Numéro de dépôt: 12159254.7
(22) Date de dépôt: 13.03.2012
(51) Int. Cl.: B64D 27/26

(54) **Mât d'accrochage de moteur pour aéronef**
Aufhängesäule eines Flugzeugmotors
Engine pylon for an aircraft

(30) Priorité: 18.03.2011 FR 1152249
(43) Date de publication de la demande: 19.09.2012
(73) Titulaire: Airbus Operations (Société par actions simplifiée), 31060 Toulouse (FR)
(72) Inventeur: Marche, Hervé, 31200 Toulouse (FR)
(74) Mandataire: Ilgart, Jean-Christophe

(56) Documents cités:
- EP-B1- 1 896 327
- FR-A1- 2 915 176

## Description

### DOMAINE TECHNIQUE

La présente invention se rapporte de façon générale à un mât d'accrochage de moteur pour aéronef, tel qu'un turboréacteur. Ce type de mât d'accrochage, également appelé « EMS » (de l'anglais « Engine Mounting Structure »), permet de suspendre le turboréacteur au-dessous de la voilure de l'aéronef, ou bien de monter ce turboréacteur au-dessus de cette même voilure, par l'intermédiaire d'une pluralité d'attaches moteur.

EP 1 896 327 B1 est considéré comme étant l'état de la technique le plus proche et divulgue toutes les caractéristiques du préambule de la revendication 1.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, dite structure primaire, souvent du type « caisson », c'est-à-dire formée par l'assemblage de longerons supérieur et inférieur et de deux panneaux latéraux raccordés entre eux par l'intermédiaire de nervures intérieures transversales.

D'autre part, le mât est muni d'un système de montage interposé entre le turboréacteur et la structure rigide du mât, ce système comportant globalement au moins deux attaches moteur, généralement au moins une attache avant et au moins une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à une attache arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, un mât d'accrochage classique de l'art antérieur est équipé d'une attache arrière habituellement solidarisée au longeron inférieur du caisson. Cette spécificité implique d'avoir un accès à l'intérieur du caisson pour pouvoir assurer le montage de l'attache arrière. Cependant, l'accessibilité à l'intérieur du mât est souvent très limitée, ce qui engendre inéluctablement des difficultés de montage, pénalisantes en termes de coût et de temps.

Une solution alternative a été proposée dans le document EP 1 896 327 B1. Elle consiste à prévoir deux ferrures latérales rapportées sur le caisson, chacune fixée entre le longeron inférieur et le panneau latéral de caisson duquel elle fait saillie, latéralement. Les ferrures latérales sont fixées sur le corps d'attache moteur arrière par des boulons verticaux, agencés en dehors du caisson.

Cette solution améliore l'accessibilité des boulons, offrant ainsi un montage plus aisé, bien que perfectible en raison de la forte proximité entre les panneaux latéraux de caisson et les boulons.

En outre, malgré l'interposition de ces ferrures entre le longeron inférieur et les panneaux latéraux, l'encombrement latéral reste élevé, donc génère des perturbations aérodynamiques non-négligeables du flux secondaire. De plus, ce montage requiert des échancrures dans les panneaux latéraux pour le passage des ferrures latérales, ainsi qu'un étranglement au niveau du longeron inférieur. La nervure intérieure transversale située au droit de ces ferrures latérales doit également présenter une forme particulière, complexe, permettant le montage « en sandwich » des ferrures. Ces accidents de forme sur les éléments précités génèrent des faiblesses mécaniques qui doivent être compensées, généralement par de l'ajout de matière pénalisante en termes de coût et de masse.

Enfin, un système de pion de cisaillement est par ailleurs prévu sous le longeron inférieur, pour assurer la reprise des efforts transversaux. Ces moyens, qui s'ajoutent aux ferrures latérales reprenant les efforts verticaux par le biais des boulons qui les traversent, complexifient fortement cette zone du mât d'accrochage.

### EXPOSÉ DE L'INVENTION

L'invention a donc pour but de proposer un mât d'accrochage de moteur pour aéronef remédiant au moins partiellement aux inconvénients mentionnés ci-dessus, relatifs aux réalisations de l'art antérieur.

Pour ce faire, l'invention a pour objet un mât d'accrochage de moteur pour aéronef, ledit mât comprenant une structure rigide du type caisson formé par l'assemblage d'un premier longeron, d'un second longeron espacé du premier selon une direction verticale (Z) du mât, de deux panneaux latéraux et de nervures intérieures transversales reliant lesdits longerons et panneaux, ledit mât comprenant également une attache moteur arrière équipée d'un corps d'attache arrière agencé en dehors dudit caisson, en regard dudit second longeron, ladite attache moteur arrière étant également pourvue de deux ferrures latérales respectivement associées aux deux panneaux latéraux auxquels elles sont fixées et desquels elles font saillie latéralement en dehors dudit caisson, chaque ferrure latérale formant avec ledit corps d'attache une interface de fixation plane traversée par des boulons.

Selon l'invention, chaque interface de fixation prend, en coupe selon un plan transversal quelconque du mât la traversant, la forme d'un segment de droite incliné à 45° par rapport à la direction verticale (Z), selon laquelle, en allant dans le sens du premier longeron vers le second longeron, ladite interface de fixation s'écarte latéralement dudit caisson.

Cette solution a pour avantage principal de diminuer l'encombrement latéral de l'ensemble formé par le caisson et les ferrures latérales, grâce à l'inclinaison spécifique à 45° des interfaces de fixation, qui contraste largement avec la solution de l'art antérieur dans laquelle ces interfaces étaient horizontales.

De plus, les boulons adoptant de préférence une même inclinaison à 45° par rapport à la verticale, leur accessibilité est facilitée. En effet, cela permet d'éloigner les extrémités de boulons des panneaux latéraux, et d'y accéder plus aisément lors de leur serrage.

En outre, l'encombrement latéral étant largement diminué, il n'est plus nécessaire d'adopter le montage retenu antérieurement, dans lequel les ferrures latérales étaient interposées entre le longeron inférieur et les panneaux latéraux. Les ferrures latérales peuvent en effet être fixées extérieurement sur les panneaux latéraux, sans pour autant générer de perturbations aérodynamiques conséquentes sur le flux secondaire. Dans ce cas préférentiel, le montage ne requiert alors plus d'échancrures dans les panneaux latéraux pour le passage des ferrures latérales, ni d'étranglement au niveau du longeron inférieur, ni même une forme particulière et complexe de la nervure intérieure transversale située au droit de ces ferrures latérales, qui permettait le montage « en sandwich » des ferrures. Il en découle une simplification de la conception, limitant considérablement les accidents de forme sur les éléments précités, ce qui confère en gain sensible en termes de coût et de masse.

Enfin, grâce à l'inclinaison des deux interfaces de fixation, à 45° par rapport à la verticale, chaque demi-attache est alors non seulement en mesure de reprendre des efforts selon la direction verticale, mais également des efforts s'exerçant selon la direction transversale. Le système de pions de cisaillement prévu dans l'art antérieur, aux fins de reprise des efforts transversaux, n'est donc plus requis. Il en découle également un gain de masse, et une simplification de la conception du mât d'accrochage.

De préférence, chaque ferrure latérale de l'attache moteur arrière comporte une première plaque de fixation sur le caisson, ainsi qu'une seconde plaque de fixation sur le corps d'attache, ladite seconde plaque de fixation présentant une surface d'appui définissant ladite interface de fixation.

De préférence, lesdites première et seconde plaques de fixation sont reliées par des nervures de renfort. Dans un tel cas, on peut préférentiellement prévoir que les nervures de renfort sont orientées selon des plans parallèles définis par la direction transversale et la direction verticale du mât.

De préférence, ladite première plaque de fixation est en appui exclusivement sur une surface extérieure de son panneau latéral associé. Ainsi, l'appui de chaque ferrure sur le caisson s'opère de préférence uniquement par cette première plaque de fixation, sur son panneau latéral associé.

De préférence, la partie du panneau latéral, sur laquelle ladite première plaque de fixation est en appui, présente une surface intérieure en appui sur une surface plane définie conjointement par le chant de l'une des nervures transversales intérieures et par une aile latérale du second longeron. Le nombre d'accidents de forme sur les éléments constitutifs du caisson est donc extrêmement limité.

A cet égard, ledit second longeron présente une largeur de préférence sensiblement constante, c'est-à-dire dépourvu d'étranglement du type de celui rencontré dans l'art antérieur.

De préférence, chacune desdites deux ferrures latérales de l'attache arrière est réalisée d'un seul tenant.

De préférence, chacune desdites deux ferrures latérales de l'attache arrière est réalisée en titane.

De préférence, chaque interface de fixation plane est parallèle à la direction longitudinale du mât, ou éventuellement inclinée par rapport à celle-ci.

De préférence, ladite attache moteur arrière est conçue de manière à définir deux demi-attaches chacune capable d'assurer la reprise des efforts s'exerçant selon la direction verticale (Z) et selon la direction transversale (Y) dudit mât.

Comme évoqué ci-dessus, cela permet de concentrer la reprise des efforts transversaux et verticaux au niveau des deux ferrures verticales.

Néanmoins, il est possible de faire en sorte que l'attache moteur arrière comporte aussi un pion de cisaillement capable d'assurer la reprise des efforts s'exerçant selon la direction transversale du mât, uniquement en cas de défaillance des moyens cités ci-dessus permettant d'assurer la reprise de ces efforts verticaux en conditions non-défaillantes. Dans cette solution, identique ou similaire à celle décrite dans le document EP 1 896 327 B1, le pion de cisaillement traverse le second longeron et dispose d'une extrémité logée dans le corps d'attache arrière, cette extrémité étant pourvue d'un alésage traversé par une goupille traversant également le corps d'attache arrière. Par conséquent, il doit être compris que ce pion de cisaillement permet d'assurer la fonction « Fail Safe » pour la transmission des efforts s'exerçant selon la direction transversale, ce qui implique que le pion est de préférence monté avec jeu dans un logement du corps d'attache arrière. Par ailleurs, la goupille coopérant avec l'alésage permet quant à elle de procurer une seconde fonction « Fail Safe » pour la transmission des efforts s'exerçant selon la direction verticale. Cet agencement peut d'ailleurs être dédoublé, et placé à proximité de chacune des deux ferrures latérales, de manière à associer à chacune d'elles la fonction « Fail Safe ».

Pour améliorer encore davantage les deux fonctions sécuritaires dites « Fail Safe » respectivement associées aux deux ferrures latérales, on peut prévoir que l'attache moteur arrière comporte en outre, associé à chacun des deux agencements, un pion annexe traversant le second longeron de caisson et disposant d'une extrémité logée dans le corps d'attache arrière, cette extrémité étant pourvue d'un alésage également traversé par la goupille. Cette dernière est préférentiellement orientée selon la direction longitudinale du mât.

Enfin, l'invention a également pour objet un aéronef comprenant au moins un mât d'accrochage tel que décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef, comprenant un mât d'accrochage selon un mode de réalisation préféré de la présente invention;
- la figure 1a représente une vue schématisant la reprise des efforts effectuée par chacune des attaches moteur de l'ensemble montré sur la figure 1,
- la figure 2 représente une vue en perspective d'une partie de l'attache moteur arrière du mât montré sur la figure 1 ;
- la figure 3 représente une vue de dessous de celle montrée sur la figure 2, avec le corps d'attache moteur arrière ayant été retiré ; et
- la figure 4 représente une vue en coupe transversale prise le long de la ligne IV-IV de la figure 3.

### EXPOSÉ DÉTAILLÉ DE MODES DE RÉALISATION PARTICULIERS

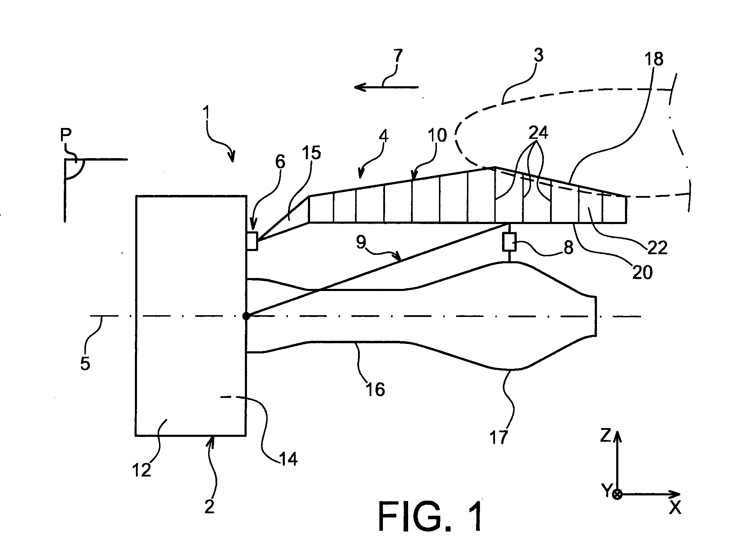

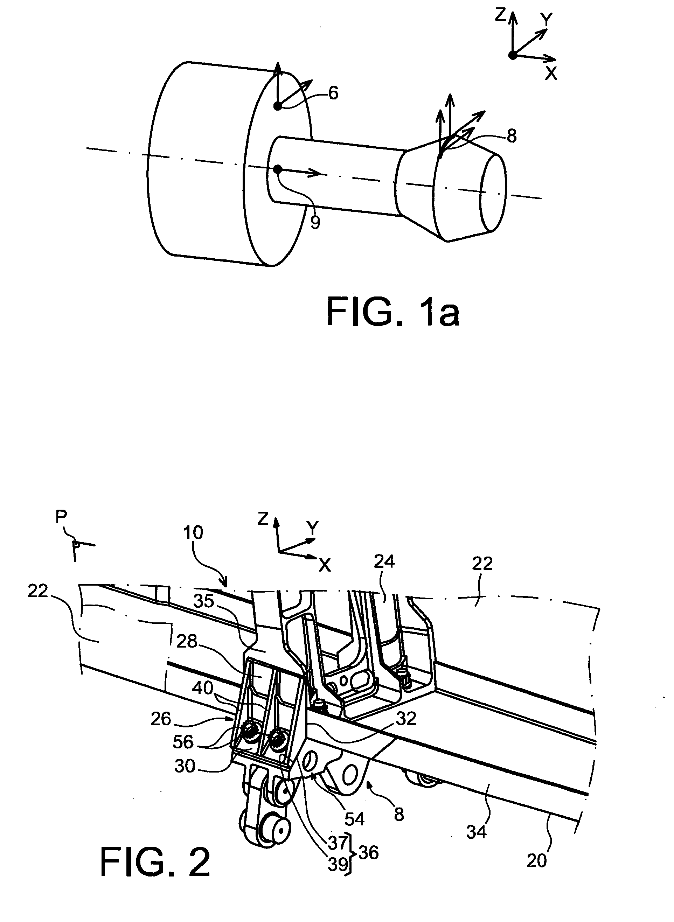

En référence à la figure 1, on voit un ensemble moteur 1 pour aéronef destiné à être fixé sous une aile 3 de cet aéronef (non représenté), cet ensemble 1 comportant un mât d'accrochage 4 selon un mode de réalisation préféré de la présente invention.

Globalement, l'ensemble moteur 1 est composé d'un moteur tel qu'un turboréacteur 2 et du mât d'accrochage 4, ce dernier étant muni notamment d'une pluralité d'attaches moteur 6, 8, 9 et d'une structure rigide 10, dite structure primaire, portant ces mêmes attaches. A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes «avant» et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seules les attaches moteur 6, 8, 9 et la structure rigide 10 du mât d'accrochage 4 ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

La structure rigide 10 se présente quant à elle sous la forme classique d'un caisson formé par un longeron supérieur 18, dit premier longeron, et un longeron inférieur 20, dit second longeron, s'étendant tous les deux selon la direction X et sensiblement dans un plan XY ou légèrement incliné par rapport à ce dernier, ainsi que par deux panneaux latéraux 22 (un seul étant visible sur la figure 1) s'étendant tous les deux selon la direction X et sensiblement dans un plan XZ. A l'intérieur de ce caisson, des nervures transversales 24 agencées selon des plans YZ et espacées longitudinalement viennent renforcer la rigidité de la structure rigide 10. Il est noté à titre indicatif que les éléments 18, 20, 22 peuvent chacun être réalisés d'un seul tenant, ou bien par l'assemblage de sections jointives.

D'autre part, le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6, une attache moteur arrière 8 formant en réalité deux demi-attaches arrière, ainsi qu'une attache 9 formant un dispositif de reprise des efforts de poussée générés par le turbomoteur 2. Comme cela est montré schématiquement sur le figure 1, ce dispositif 9 prend par exemple la forme de deux bielles latérales (une seule étant visible en raison de la vue de côté) raccordées d'une part à une partie arrière du carter de soufflante 12, et d'autre part à un palonnier monté sur l'attache arrière 8. En outre, il est indiqué que les extrémités arrière de ces bielles pourraient alternativement être raccordées à un palonnier positionné en avant par rapport à l'attache arrière.

L'attache moteur avant 6, solidarisée à la pyramide 15 de la structure rigide 10 et au carter de soufflante 12, est conçue classiquement de manière à pouvoir reprendre uniquement des efforts générés par le turboréacteur 2 selon les directions Y et Z, et donc pas ceux s'exerçant selon la direction X. A titre indicatif, cette attache avant 6 pénètre de préférence dans une portion interne du carter de soufflante qui porte des pales fixes de ce dernier, et étant située à proximité d'une extrémité avant du carter central.

L'attache moteur arrière 8 constitue une particularité de l'invention et sera plus amplement détaillée en référence aux figures 2 à 4. Elle est globalement interposée entre le carter d'éjection 17 et la structure rigide 10 du mât. Elle est quant à elle conçue pour former deux demi-attaches disposées de façon symétrique par rapport à un plan P défini par l'axe 5 et la direction Z, chacune de ces demi-attaches étant conçue de manière à pouvoir reprendre des efforts générés par le turboréacteur 2 selon les directions Y et Z, mais pas ceux s'exerçant selon la direction X.

De cette manière, comme on peut le voir schématiquement sur la figure 1a, la reprise des efforts s'exerçant selon la direction X s'effectue à l'aide de l'attache 9, et la reprise des efforts s'exerçant selon les directions Y et Z s'effectue conjointement à l'aide l'attache avant 6 et de l'attache arrière 8.

D'autre part, la reprise du moment s'exerçant selon la direction X s'effectue verticalement à l'aide des deux demi-attaches de l'attache 8, la reprise du moment s'exerçant selon la direction Y s'effectue verticalement à l'aide des deux demi-attaches de l'attache 8 conjointement avec l'attache 6, et la reprise du moment s'exerçant selon la direction Z s'effectue transversalement à l'aide de l'attache 8, conjointement avec l'attache 6.

En référence à présent à la figure 2, on peut voir une partie de l'attache moteur arrière 8, formant les deux demi-attaches arrière assurant chacune la reprise des efforts s'exerçant selon les directions Y et Z, et étant agencées symétriquement par rapport au plan P précité.

Les deux demi-attaches arrière étant symétriques, seule celle de gauche visible sur la figure 2 sera détaillée ci-après. Globalement, celle-ci comprend une ferrure latérale 26 comprenant une première plaque 28 de fixation sur le caisson, et une seconde plaque 30 de fixation sur un corps d'attache arrière 54. Elle présente de préférence un plan de symétrie orienté selon les directions Y et Z. La première plaque 28 s'étend donc selon la direction X sensiblement dans un plan XZ, et comprend une face intérieure 32 en contact plan avec une surface extérieure du panneau latéral associé 22. De préférence, cette première plaque de fixation 28 n'est donc en contact qu'avec ce panneau 22 du caisson, lui-même en contact plan avec une aile latérale 34 du longeron inférieur 20 et la nervure 24 en regard, comme cela sera détaillé ci-après. A titre indicatif, il est connu de l'homme du métier que cette aile 34 est également sensiblement orientée selon un plan XZ de manière à permettre l'assemblage du panneau latéral 22 sur ce longeron 20, par exemple par rivetage ou éclissage.

L'assemblage de la plaque 28 sur le panneau 22 s'effectue de préférence à l'aide de boulons transversaux (non représentés) traversant successivement la plaque 28, le panneau latéral 22, le chant 35, et éventuellement l'aile 34 pour les boulons les plus inférieurs.

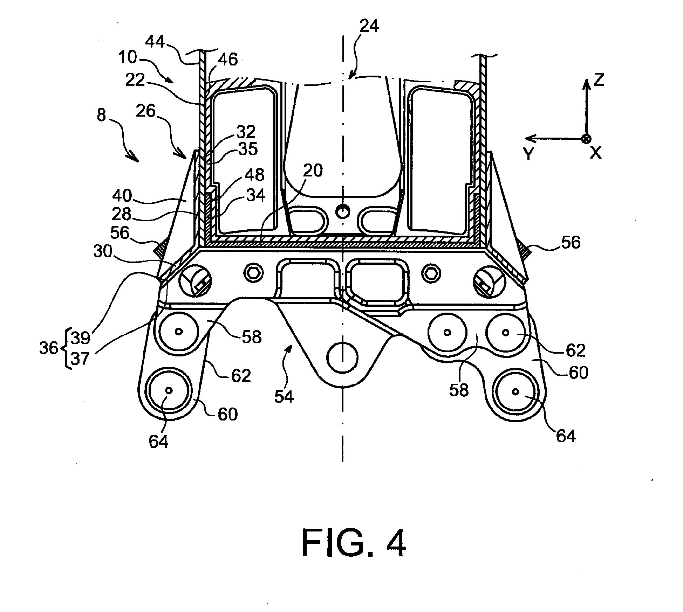

La seconde plaque de fixation 30 présente une face de fixation ou surface d'appui 37 en contact plan avec une face de fixation ou surface d'appui complémentaire 39 prévue à l'extrémité latérale du corps d'attache 54, ces deux faces 37, 39 formant une interface de fixation plane 36 spécifique à la présente invention, qui sera plus amplement décrite en référence à la figure 4.

D'autre part, la ferrure latérale 26 comporte des nervures de renfort 40 solidaires de la face supérieure de la plaque de fixation 30 et de la face extérieure de la plaque de fixation 28, ces nervures 40 étant orientées selon des plans parallèles YZ. D'une manière préférée, on peut prévoir que l'interface 36 se situe approximativement dans la continuité latérale d'une surface inférieure du longeron 20, comme cela est visible sur la figure 2.

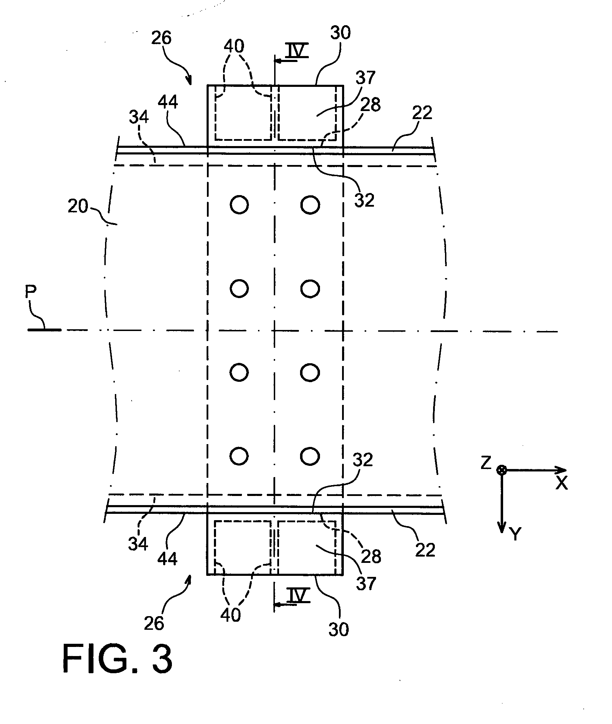

En référence à présent plus spécifiquement aux figures 3 et 4, on peut voir que la face intérieure 32 de la plaque 28 est au contact d'une face extérieure 44 du panneau latéral 22 lui étant associé. Par conséquent, l'ensemble de la ferrure latérale 26 se situe en dehors avec le caisson, le seul contact avec ce dernier étant prévue entre les surfaces 32 et 44.

De plus, la surface intérieure 46 de la partie du panneau qui est contactée par la plaque 28 est elle-même en contact plan avec une surface plane définie conjointement par le chant vertical 35 de la nervure intérieure 24, et en partie inférieure, par l'aile latérale 34 du longeron 20. Pour ce faire, un léger décrochement 48 est prévu au niveau de la partie inférieure du chant 35, pour le logement de l'aile 34 d'épaisseur correspondante.

Ainsi, comme le montre la figure 3, le panneau 22 ne nécessite pas d'échancrure pour le passage des ferrures latérales 26, de même que le longeron inférieur 20 est de largeur sensiblement constante, à savoir dépourvu d'étranglement transversal.

En référence à présent plus spécifiquement à la figure 4, chaque ferrure latérale 26, qui est de préférence réalisée d'une seul tenant et en titane, est donc fixée au corps d'attache arrière 54 disposé transversalement au dessous du longeron inférieur 20. Un faible jeu peut d'ailleurs être adopté entre le corps 54 et le longeron inférieur 20 en regard.

Le corps 54 comporte alors, pour chaque demi-attache, une chape 58 sur laquelle est articulée une manille 60 par l'intermédiaire d'un axe 62 orienté selon la direction X. Comme on peut le voir sur la figure 4, la manille ou bielle 60 est légèrement inclinée par rapport à la verticale, de façon à se rapprocher du plan P en allant vers le haut.

A titre indicatif, un second axe 64 également orienté selon la direction X, est également prévu au niveau d'une extrémité inférieure de la manille 60, de manière à articuler cette dernière sur une ferrure/chape (non représentée) solidarisée au carter du turboréacteur 2. Par conséquent, on peut donc comprendre que chaque demi-attache arrière comprend la manille articulée 60, la chape 58 et la ferrure 26, les deux chapes 58 des deux demi-attaches étant par ailleurs réunies au sein du même corps d'attache arrière 54, de préférence réalisé d'un seul tenant.

L'une des particularités de la présente invention réside dans le fait qu'en coupe selon un plan transversal YZ quelconque du mât traversant les interfaces de fixation 36, comme la coupe montrée sur la figure 4, chaque interface 36 prend la forme d'un segment de droite incliné à 45° par rapport à la direction Z. Sachant que chaque interface est préférentiellement parallèle à la direction X, le segment de droit est identique quelque soit le plan de coupe. Cela confère une limitation de l'encombrement selon la direction Y, et permet d'assurer, à l'aide de chaque demi-attache arrière, la reprise des efforts s'exerçant selon la direction Y et selon la direction Z. L'inclinaison est telle qu'en allant dans la direction Z dans le sens du longeron 18 vers le longeron 20, chaque interface de fixation 36 s'écarte latéralement du caisson. Par conséquent, les deux segments de droite, symétriques par rapport au plan P, appartiennent respectivement à deux droites fictives qui s'interceptent dans le caisson 10.

Les boulons 56 qui traversent ces interfaces sont de préférence tous orientés orthogonalement à leur interface associée 36, donc également orientés à 45° par rapport à la direction verticale. Ils permettent de maintenir la pression entre les surfaces d'appui 37 et 39, avec une tête de vis agencée latéralement à l'extérieur du caisson, et un écrou logé dans le corps d'attache moteur 54.

Dans l'exemple montré sur les figures, les première et seconde plaque de fixation 28, 30 sont donc toutes les deux parallèles à la direction X, et inclinées d'un angle d'environ 225° l'une par rapport à l'autre.

Il ressort de la description qui précède que l'attache moteur arrière 8 forme deux demi-attaches chacune capable d'assurer la reprise des efforts s'exerçant selon la direction Y et selon la direction Z. Des pions (visibles sur la figure 2) et des goupilles (non représentes) analogues à ceux décrits dans le document EP 1 896 327 B1 peuvent néanmoins être prévus, afin d'assurer la fonction dite « Fail Safe » de la reprise des efforts selon ces deux directions Y et Z.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

## Revendications

1. Mât d'accrochage (4) de moteur (2) pour aéronef, ledit mât comprenant une structure rigide (10) du type caisson formé par l'assemblage d'un premier longeron (18), d'un second longeron (20) espacé du premier selon une direction verticale (Z) du mât, de deux panneaux latéraux (22) et de nervures intérieures transversales (24) reliant lesdits longerons et panneaux (18, 20, 22), ledit mât comprenant également une attache moteur arrière (8) équipée d'un corps d'attache arrière (54) agencé en dehors dudit caisson, en regard dudit second longeron (20), ladite attache moteur arrière (8) étant également pourvue de deux ferrures latérales (26) respectivement associées aux deux panneaux latéraux (22) auxquels elles sont fixées et desquels elles font saillie latéralement en dehors dudit caisson, chaque ferrure latérale (26) formant avec ledit corps d'attache (54) une interface de fixation plane (36) traversée par des boulons (56),
**caractérisé en ce que** chaque interface de fixation (36) prend, en coupe selon un plan transversal quelconque du mât la traversant, la forme d'un segment de droite incliné à 45° par rapport à la direction verticale (Z), selon laquelle, en allant dans le sens du premier longeron (18) vers le second longeron (20), ladite interface de fixation (36) s'écarte latéralement dudit caisson.

2. Mât d'accrochage (4) selon la revendication 1, **caractérisé en ce que** chaque ferrure latérale (26) de l'attache moteur arrière (8) comporte une première plaque de fixation (28) sur le caisson, ainsi qu'une seconde plaque de fixation (30) sur le corps d'attache, ladite seconde plaque de fixation présentant une surface d'appui (37) définissant ladite interface de fixation.

3. Mât d'accrochage (4) selon la revendication 2, **caractérisé en ce que** lesdites première et seconde plaques de fixation (28, 30) sont reliées par des nervures de renfort (40).

4. Mât d'accrochage (4) selon la revendication 2 ou la revendication 3, **caractérisé en ce que** ladite première plaque de fixation (28) est en appui exclusivement sur une surface extérieure (44) de son panneau latéral associé (22).

5. Mât d'accrochage (4) selon la revendication 4, **caractérisé en ce que** la partie du panneau latéral (22), sur laquelle ladite première plaque de fixation (28) est en appui, présente une surface intérieure (46) en appui sur une surface plane définie conjointement par le chant (35) de l'une des nervures transversales intérieures (24) et par une aile latérale (34) du second longeron (20).

6. Mât d'accrochage (4) selon l'une quelconque des revendications précédentes, **caractérisé en ce que** ledit second longeron (20) présente une largeur sensiblement constante.

7. Mât d'accrochage (4) selon l'une quelconque des revendications précédentes, **caractérisé en ce que** chacune desdites deux ferrures latérales (26) de l'attache arrière est réalisée d'un seul tenant.

8. Mât d'accrochage (4) selon l'une quelconque des revendications précédentes, **caractérisé en ce que** chacune desdites deux ferrures latérales (26) de l'attache arrière est réalisée en titane.

9. Mât d'accrochage (4) selon l'une quelconque des revendications précédentes, **caractérisé en ce que** ladite attache arrière (8) est conçue de manière à définir deux demi-attaches chacune capable d'assurer la reprise des efforts s'exerçant selon la direction verticale (Z) et selon la direction transversale (Y) dudit mât.

10. Aéronef **caractérisé en ce qu'**il comprend au moins un mât d'accrochage (4) selon l'une quelconque des revendications précédentes.

## Patentansprüche

1. Aufhängesystem (4) eines Triebwerks (2) für ein Luftfahrzeug, wobei das System eine starre Struktur (10) vom Kastentyp aufweist, der durch die Anordnung von einem ersten Träger (18), einem zweiten Träger (20), der von dem ersten in einer Vertikalenrichtung (Z) des Systems beabstandet ist, zwei Seitenplatten (22) und inneren Querrippen (24), die die Träger und die Platten (18, 20, 22) verbinden, gebildet ist, wobei das System auch eine hintere Triebwerkbefestigung (8) umfasst, die mit einem Körper der hinteren Befestigung (54) ausgestattet ist, der außerhalb des Kastens im Hinblick auf den zweiten Träger (20) angeordnet ist, wobei die hintere Triebwerkbefestigung (8) auch mit zwei Seitenbeschlägen (26) ausgestattet ist, die jeweils mit den zwei Seitenplatten (22) verbunden sind, an denen sie befestigt sind und von denen sie seitlich von dem Kasten vorstehen, wobei jeder Seitenbeschlag (26) mit dem Befestigungskörper (54) eine plane Befestigungsfläche (36) bildet, durch die Bolzen (56) hindurchgehen,
**dadurch gekennzeichnet, dass** jede Befestigungsfläche (36) - im Schnitt längs einer beliebigen Querebene des durch diese hindurchgehenden Systems - die Form eines Geradensegments annimmt, das 45° in Bezug auf die Vertikalenrichtung (Z), in der sich, wenn man in der Richtung von dem ersten Träger (18) zu dem zweiten Träger (20) geht, die Befestigungsfläche (36) seitlich von dem Kasten erstreckt, geneigt ist.

2. Aufhängesystem (4) nach Anspruch 1, **dadurch gekennzeichnet, dass** jeder Seitenbeschlag (26) der hinteren Triebwerkbefestigung (8) eine erste Befestigungsplatte (28) an dem Kasten sowie eine zweite Befestigungsplatte (30) an dem Befestigungskörper aufweist, wobei die zweite Befestigungsplatte eine Abstützfläche (37) aufweist, die die Befestigungsfläche festlegt.

3. Aufhängesystem (4) nach Anspruch 2, **dadurch gekennzeichnet, dass** die erste und die zweite Befestigungsplatte (28, 30) durch Verstärkungsrippen (40) verbunden sind.

4. Aufhängesystem (4) nach Anspruch 2 oder Anspruch 3, **dadurch gekennzeichnet, dass** sich die erste Befestigungsplatte (28) ausschließlich an einer äußeren Oberfläche (44) von deren damit verbundener Seitenplatte (22) abstützt.

5. Aufhängesystem (4) nach Anspruch 4, **dadurch gekennzeichnet, dass** der Bereich der Seitenplatte (22), an der die erste Befestigungsplatte (28) abgestützt ist, eine innere Oberfläche (46) aufweist, die an einer planen Oberfläche abgestützt ist, die gemeinsam durch die Schmalseite (35) von einer der inneren Querrippen (24) und durch einen Seitenflügel (34) des zweiten Trägers (20) festgelegt ist.

6. Aufhängesystem (4) nach einem der vorhergehenden Ansprüche, **dadurch gekennzeichnet, dass** der zweite Träger (20) eine im Wesentlichen konstante Breite aufweist.

7. Aufhängesystem (4) nach einem der vorhergehenden Ansprüche, **dadurch gekennzeichnet, dass** jeder der beiden Seitenbeschläge (26) der hinteren Befestigung einstückig ausgeführt ist.

8. Aufhängesystem (4) nach einem der vorhergehenden Ansprüche, **dadurch gekennzeichnet, dass** jeder der beiden Seitenbeschläge (26) der hinteren Befestigung in Titan ausgeführt ist.

9. Aufhängesystem (4) nach einem der vorhergehenden Ansprüche, **dadurch gekennzeichnet, dass** die hintere Befestigung (8) derart gestaltet ist, dass zwei Halbbefestigungen festgelegt werden, die jeweils die Aufnahme von Kräften, die längs der Vertikalenrichtung (Z) und längs der Querrichtung (Y) des Systems auftreten, gewährleisten können.

10. Luftfahrzeug, **dadurch gekennzeichnet, dass** es mindestens ein Aufhängesystem (4) nach einem der vorhergehenden Ansprüche umfasst.

## Claims

1. Attachment pylon (4) for an aircraft engine (2), said pylon comprising a box type rigid structure (10) formed by the assembly of a first spar (18), a second spar (20) at a spacing from the first spar along a vertical direction (Z) of the pylon, two lateral panels (22) and transverse inner ribs (24) connecting said spars and panels (18, 20, 22), said pylon also comprising an aft engine attachment (8) fitted with an aft attachment body (54) arranged outside said box, facing said second spar(20), said aft engine attachment (8) also being fitted with two lateral fittings (26) associated with the two corresponding lateral panels (22) to which they are fixed and from which they project laterally outside said box, each lateral fitting (26) forming a plane attachment interface (36) with said attachment body (54) through which bolts (56) pass,
**characterised in that** each attachment interface (36) is in the form of a straight segment inclined at 45° from the vertical direction (Z) as seen in section on any transverse plane of the pylon passing through it, according to which the distance between said attachment interface (36) and said box increases with increasing distance from the first spar (18) towards the second spar (20).

2. Attachment pylon (4) according to claim 1, **characterised in that** each lateral fitting (26) of the aft engine attachment (8) comprises a first attachment plate (28) onto the box, and a second attachment plate (30) onto the attachment body, said second attachment plate having a bearing surface (37) defining said attachment interface.

3. Attachment pylon (4) according to claim 2, **characterised in that** said first and second attachment plates (28, 30) are connected by stiffener ribs (40).

4. Attachment pylon (4) according to claim 2 or claim 3, **characterised in that** said first attachment plate (28) bears exclusively on an outer surface (44) of its associated lateral panel (22).

5. Attachment pylon (4) according to claim 4, **characterised in that** the part of the lateral panel (22) on which said first attachment plate (28) bears, has an inner surface (46) that bears on a plane surface defined jointly by the edge (35) of one of the inner transverse ribs (24) and by a lateral flange (34) of the second spar (20).

6. Attachment pylon (4) according to any one of the previous claims, **characterised in that** said second spar (20) has an approximately constant width.

7. Attachment pylon (4) according to any one of the previous claims, **characterised in that** each of said two lateral fittings (26) of the aft attachment is made in a single piece.

8. Attachment pylon (4) according to any one of the previous claims, **characterised in that** each of said lateral fittings (26) of the aft attachment is made from titanium.

9. Attachment pylon (4) according to any one of the previous claims, **characterised in that** said aft attachment (8) is designed so as to define two half-attachments each capable of resisting forces applied along the vertical direction (Z) and along the transverse direction (Y) of said pylon.

10. Aircraft **characterised in that** it comprises at least one attachment pylon (4) according to any one of the previous claims.
